# EUROPEAN PATENT SPECIFICATION

(11) **EP 3 236 750 B1**
(45) Date of publication and mention of the grant of the patent: **30.10.2019**
(21) Application number: 15813080.7
(22) Date of filing: 21.12.2015
(51) Int. Cl.: A01N 43/40, A01N 47/36, A01P 13/00, A01N 25/04

(54) **HERBICIDAL OIL DISPERSION**
HERBIZIDE ÖLDISPERSION
DISPERSION D'HUILE HERBICIDE

(30) Priority: 22.12.2014 EP 14199868
(43) Date of publication of application: 01.11.2017
(73) Proprietor: Mitsui AgriScience International S.A./N.V., Dublin D02 N820 (IE)
(72) Inventor: EGAN, Oliver, Navan County Meath (IE); GOLDSMITH, Andrew, Waterlooville Hampshire PO7 6TY (GB)
(74) Representative: Hoffmann Eitle
(86) International application number: PCT/EP2015/080849
(87) International publication number: WO 2016/102504

(56) References cited:
- EP-A1- 1 844 653
- WO-A1-02/067682
- WO-A2-2005/041654
- WO-A2-2008/011511
- WO-A2-2008/058617
- WO-A2-2009/152827
- CN-A- 104 738 069
- CN-A- 104 996 447

## Description

### 1. FIELD OF THE INVENTION

This invention relates to herbicidal oil dispersions (OD) comprising a non-aqueous solvent system, metsulfuron methyl as a sodium salt suspended in the solvent system; and fluroxypyr-meptyl, dissolved in the solvent system.

### 2. BACKGROUND OF THE INVENTION

Herbicides are routinely used to destroy unwanted vegetation such as weeds, grasses and woody plants. Selective herbicides kill or significantly retard the growth of unwanted vegetation without significantly damaging other desired species such as crop plants. Many herbicides, particularly selective herbicides, have a narrow spectrum of weed control. It is therefore common practice when controlling the growth of weeds to use two or more herbicides, such as two or more selective herbicides from different herbicide families, as this often provides greater control than a single herbicide used alone. The two or more herbicides may be applied sequentially in a series of applications. More often the two or more herbicides are mixed and applied in a single application.

Fluroxypyr (see US 4,110,104 for its synthesis) is a known selective herbicide in the class of synthetic auxins and is widely used to control broadleaf weeds and woody brush. Fluroxypyr can be used as the free carboxylic acid form but is normally used in the form of an ester derivative since this is more effectively transported within the weed to multiple sites of action before being metabolised. Commonly used fluroxypyr esters are the 1-methylheptyl ("meptyl") ester or the 2-butoxy-1-methylethyl ester ("butoxypropyl"). The most widely used form is the fluroxypyr meptyl ester and this is typically formulated as an emulsifiable concentrate in an aromatic hydrocarbon solvent. Upon dilution with water, the concentrate forms an oil-in-water emulsion with the fluroxypyr meptyl ester dissolved in the aromatic hydrocarbon solvent. Aromatic hydrocarbon solvents have historically been used to increase stability of the concentrate at low temperatures and to enhance the penetration of the fluroxypyr ester through the waxy coating on the leaf of a weed. Starane™ herbicide, a trademark of Dow AgroSciences LLC, is one example of a commercially available emulsifiable concentrate of fluroxypyr meptyl ester. This formulation uses a naphtha solvent carrier and further contains an emulsifying surfactant system.

Sulfonylureas (SUs) are a different family of selective herbicides and these act by inhibiting amino acid synthesis in the target vegetation. SUs are known to be unstable as they have a tendency to hydrolyse via cleavage at the sulfonylurea bridge. While this instability is sometimes considered favourable in terms of achieving low soil residues of these compounds, it poses problems with respect to the storage stability of the formulated products, particularly in liquid formulations. Furthermore, some sulfonylurea herbicides are also prone to degradation due to chemical incompatibilities with other herbicidal ingredients in the formulation. Accordingly, SUs are normally formulated as powders, granules and tablets (e.g. see EP 0 764 404 A1, WO 98/34482 A1, and WO 93/13658 A1). In recent years the most widely sold granular formulations of SUs contain the SU intimately mixed with an inorganic alkali metal salt, a binder and a wetting agent. When added to water in a spray tank, the inorganic salt forms a basic solution which reacts with the SU to form the SU metal salt in situ. The SU salt, being water soluble, allows a homogeneous spray solution to be formed which makes it easier to clean out the spray tank after use. Metsulfuron-methyl is one example of a SU (see US 4,370,480 for its synthesis) and is commercially available under the trade name Ally™ SX by DuPont.

Fluroxypyr (and its esters) and SUs are very important herbicides for controlling weed growth in cereal crops and so successfully combining both types into a single formulation would provide enormous benefits in terms of convenience for the end user as well as reduce packaging waste which can have a detrimental effect on the environment. Furthermore, applying both fluroxypyr and SUs to crops as a single formulation would save both time and labour for the end user, reduce soil compaction by eliminating multiple field operations, and increase the spectrum of weed control that can be realised by applying either herbicide alone.

Despite the potential benefits of combining fluroxypyr and SUs into a single formulation, efforts to effectively combine both types of herbicide have until now met with limited success. A major problem is that fluroxypyr and SUs are very different in terms of their chemical, biological and physicochemical properties and so combining both types of herbicide in a single formulation which is stable but remains efficacious after storage is a challenge. The formulation should ideally contain a hydrocarbon solvent to enhance penetration of fluroxypyr through the waxy coating of a leaf yet at the same time minimize hydrolysis and degradation of the sulfonylurea. A further problem is that the co-formulation of a fluroxypyr-type co-herbicide tends to cause decomposition of the sulfonylurea, particularly sulfonylureas such as metsulfuron methyl and tribenuron methyl.

One effort to combine both types of herbicides in a single mixture has been reported (EP 1 844 653 A1) but this involves a complicated process of encapsulating herbicidal compounds in what appears to be an isocyanate- or glycoluril-type derivative. This process has certain disadvantages such as the prohibitive costs of the encapsulating polymers, the energy utilised in the encapsulation process and the specialised equipment required for encapsulation. Indeed, this process does not appear to fully solve the problem of minimising sulfonylurea hydrolysis since the sulfonylureas appear to be formulated to be outside the microcapsules. A further reported effort to combine fluroxypyr and SUs (see WO 2009/152827 A2) does not require microencapsulation but does require that the SU be in a crystalline form. Furthermore, the oil used in the mixture must be carefully chosen (one in which the SU has a solubility of less than 10 g/kg) and the presence of at least two non-ionic surfactants and one ionic emulsifier is reported as being a necessary feature of the composition. These requirements greatly limit the number of available compositions that can be prepared.

There is a clear need for an improved system for reliably delivering more chemically stable oil dispersions of a sulfonylurea herbicide and a co-formulated flyroxypyr-type co-herbicide. One object of the present invention is to provide an oil dispersion comprising fluroxypyr-meptyl, that addresses the problems in the art such as, for example, those discussed above. In particular, an object of the invention is to provide a stable, efficacious and safe OD formulation comprising metsulfuron methyl as a sodium salt and fluroxypyr-meptyl.

### 3. SUMMARY OF THE INVENTION

The present invention provides an oil dispersion comprising: (i) a non-aqueous solvent system; (ii) metsulfuron methyl as sodium salt thereof, suspended in the non-aqueous solvent system; and (iii) fluroxypyr-meptyl dissolved in the non-aqueous solvent system.

Surprisingly, the oil dispersion of the present invention exhibits little or no settling during prolonged storage, it is stable when stored at elevated temperatures, it easily forms a resuspension if agitated, it exhibits little or no crystalline material during storage and it exhibits little or no separation of the oily phase when diluted with water. Furthermore, the oil dispersion avoids any possible compatibility issues between the fluoroxypyr and the SU as these herbicides are phase separated. The oil dispersion also allows further adjuvants to be included in the formulation without affecting the stability of the system thus avoiding the need for these to be added separately by the end user. Moreover, the oil dispersion has excellent physical stability, is easy to apply and easy to use and has been shown to exhibit high biological effectiveness and crop plant compatibility.

### 4. DETAILED DESCRIPTION OF THE INVENTION

### 4.1 General remarks

As used herein, the terms "comprises", "comprising", "includes", "including", "has", "having" or any other variation thereof, are intended to cover a non-exclusive inclusion. For example, a composition that comprises a list of components is not necessarily limited to only those components but may include other components that are not expressly listed or inherent to such a composition. That said, the terms "comprises", "comprising", "includes", "including", "has", "having" or any other variation thereof also cover the disclosed embodiment having no further additional components (i.e. consisting of those components). By way of example, reference to an oil dispersion comprising isobornyl acetate, the sodium salt of a sulfonylurea, and fluoroxypyr meptyl discloses the oil dispersion with just these three components as well as compositions comprising these three components along with other unmentioned components.

Also, the indefinite articles "a" and "an" preceding an element or component of the invention are intended to be non-restrictive regarding the number of instances (i.e. occurrences) of the element or component. Therefore "a" or "an" should be read to include one or at least one, and the singular word form of the element or component also includes the plural unless the number is obviously meant to be singular. By way of example, reference to an oil dispersion comprising a surfactant should be understood to mean that the composition comprises one or at least one surfactant unless specified otherwise.

Further, when an aspect of the invention is described as being 'preferred', it should be understood that this preferred aspect of the invention can be combined with other preferred aspects of the invention.

### 4.2 Oil dispersion

The herbicidal composition of the invention is an oil dispersion (see the "Catalogue of pesticide formulation types and international coding system", Technical Monograph No. 2, 6th Ed. May 2008, CropLife International). As used herein, the term "*oil dispersion*" is to be understood as meaning a dispersion concentrate based on a non-aqueous solvent system (e.g. an organic solvent) in which metsulfuron methyl sodium salt is suspended in the non-aqueous solvent system. In the present invention the oil dispersion further comprises fluroxypyr-meptyl dissolved in the non-aqueous solvent system. The oil dispersion may comprise further herbicidal compounds, safeners and co-formulants.

In the absence of any indication to the contrary, the terms "*suspended*" and "*dissolved*" take their ordinary meaning in this technical field. Whether a compound is suspended or dissolved can be determined at standard temperature and pressure. For the avoidance of any doubt, the term "*suspended*" can be taken to mean that 80 wt.% or more, preferably 90 wt.% or more, even more preferably 95 wt.% or more of the compound in question is suspended within the oil dispersion whereas the term "*dissolved*" can be taken to mean that 90 wt.% or more, preferably 95 wt.% or more, even more preferably 99 wt.% or more of the compound in question is dissolved in the oil dispersion.

### 4.3 Sulfonylurea salt

The alkali metal salt or the alkaline earth metal salt of a sulfonyl urea tends to be less soluble in the non-aqueous solvent system and so undergoes hydrolysis to a lesser extent than the free sulfonylurea during storage. On the other hand, the alkali metal salt or the alkaline earth metal salt tends to be more soluble in water than the free sulfonylurea and so is less likely to cause blockage of the spraying nozzles after dilution with water. The high water-solubility of the alkali metal salt or the alkaline earth metal salt also makes it easier to clean out the spray tank after use.

The sodium salt is the most preferred salt as this salt has been found to be highly water-soluble. Accordingly, the SU suspended in the oil is the sodium salt of metsulfuron-methyl.

The SU salt can be prepared by any means known in the art, for example by treating a solution of the sulfonylurea in a solvent with the appropriate alkali or alkaline earth metal alkoxide and then isolating the salt by evaporating the solvent (e.g. see WO 1990/006308 A1; WO 97/41112 A1).

The sulfonylurea salt is preferably comprised in the oil dispersion of the invention in an amount of at least 0.1 wt.% based on the total weight of the oil dispersion. More preferably, the sulfonylurea salt is comprised in an amount of at least 0.2 wt.%, at least 0.5 wt.%, at least 0.7 wt.%, at least 1 wt.%, at least 2 wt.%, at least 5 wt.% or at least 7 wt.%. The sulfonylurea salt is preferably comprised in the oil dispersion in an amount of 60 wt.% or less. More preferably, the sulfonylurea salt is comprised in an amount of 50 wt.% or less, 40 wt.% or less, 30 wt.% or less, 25 wt.% or less, 20 wt.% or less, 10 wt.% or less, 5 wt.% or less, 2 wt.% or less, or 1 wt.% or less. Any of the preferred lower wt.% limits for the amount of sulfonylurea salt can be combined with any of the preferred upper wt.% limits to define further suitable wt.% ranges for the present invention. As an example, further exemplary ranges for the amount of sulfonylurea salt in the oil dispersion include 0.1 to 60 wt.%, 1 to 50wt.%, 2 to 40 wt.%, 5 to 30 wt.%, 0.5 to 20 wt.%, 7 to 30 wt.%, 5 to 10 wt.%, 0.2 to 5 wt.%, 0.5 to 2 wt.% and 0.5 to 1 wt.%. When more than one sulfonylurea salt is present in the composition, then the amounts described herein refer to the sum amount of all the sulfonylureas present in the composition.

To increase the oil dispersion stability, the mean particle size of the SU salt is preferably 30 µm or less, 15 µm or less, 10 µm or less, 7 µm or less, 5 µm or less, 3 µm or less, 1 µm or less, or 500 nm or less. A smaller particle size is also desirable in view of increasing solubility upon dilution with water and providing greater weed coverage. To lower costs and reduce viscosity of the oil dispersion it is preferable that the mean particle size of the SU salt is 100 nm or more, preferably 200 nm or more, preferably 500 nm or more, preferably 1 µm or more, preferably 2 µm or more, more preferably 3 µm or more. Any of the preferred upper limits for the sulfonylurea salt particle size can be combined with any of the preferred lower limits to define further suitable particle size ranges for the present invention. As an example, further exemplary ranges for the particle size (D50) of the sulfonylurea salt include 0.1-30 µm, 0.2-15 µm, 0.5-10 µm, 0.1-0.5 µm, 0.2-1 µm, 0.5-3 µm, 1-15 µm, 1-10 µm, 1-7 µm, 2-15 µm, 2-10 µm, 2-7 µm, 3-15 µm, 3-10 µm, and 3-7 µm. D50 refers to the volume median particle size and can be determined by laser light scattering using the method described in CIPAC MT187.

The particle size of the SU salt can be controlled by milling larger particles using conventional milling techniques such as, for example, air milling, hammer milling, crushing (jaw, gyratory cone, roller, impact), impact milling (stationary plates), tumble milling with grinding media (balls, rods), roller milling (feeding through a small gap), pin milling, ball milling, jet air milling (spiral, opposed, fluidized).

### 4.4 Non-aqueous solvent system

The oil dispersion of the present invention comprises a non-aqueous solvent system. The term "*non-aqueous solvent system*" means that one or more solvents other than water (e.g. organic solvents) are used as the liquid carrier in the oil dispersion. This does not mean to say that the solvent system must necessarily be completely free of water. Trace amounts of water may be present in the components that are used to prepare the non-aqueous solvent system. For instance, trace amounts of water may be introduced into the solvent system by organic solvents, surfactants or other components. While the term "*non-aqueous solvent system*" is clear in this technical field, for the avoidance of any doubt the term can be taken to mean that the oil dispersion comprises water in an amount of 5 wt.% or less of the composition, preferably 3 wt.% or less, more preferably 2 wt.% and most preferably 1 wt.% or less.

Typical solvents that can be used for the non-aqueous solvent system are described in Marsden, Solvents Guide, 2nd Ed., Interscience, New York, 1950. The non-aqueous solvent system preferably contains one or more aprotic organic solvents as the major constituent of the solvent system. In terms of improving stability of the sulfonylurea, the one or more aprotic solvents preferably make up 50 wt.% or more, more preferably 60 wt.% or more, 70 wt.% or more, 80 wt.% or more and most preferably 90 wt.% or more of the solvent system. Suitable aprotic organic solvents for use in the present invention include, for example, those listed under "*Component (C)*" in US 2005/0113254 (Bayer CropScience GmbH):
(1) hydrocarbons, which may be unsubstituted or substituted, for example
   (1a) aromatic hydrocarbons, for example mono- or polyalkyl-substituted benzenes, such as toluene, xylenes, mesitylene, ethylbenzene, or mono- or polyalkyl-substituted naphthalenes, such as 1-methylnaphthalene, 2-methylnaphthalene or dimethylnaphthalene, or other benzene-derived aromatic hydrocarbons, such as indane or Tetralin®, or mixtures thereof,
   (1b) aliphatic hydrocarbons, for example straight-chain or branched aliphatics, for example of the formula CₙH₂ₙ₊₂, such as pentane, hexane, octane, 2-methylbutane or 2,2,4-trimethylpentane, or cyclic, optionally alkyl-substituted aliphatics, such as cyclohexane or methylcyclopentane, or mixtures thereof, such as solvents of the Exxsol® D series, Isopar® series or Bayol® series, for example Bayol® 82 (ExxonMobil Chemicals), or the Isane® IP series or Hydroseal® G series (TotalFinaElf), as well as straight-chain, branched or cyclic unsaturated aliphatics including terpenes such as turpentine and its constituents (e.g. pinene, camphene) as well as compounds derivable therefrom such as isobornyl acetate (exo-1,7,7-trimethylbicyclo [2.2.1]hept-2-yl acetate),
   (1c) mixtures of aromatic and aliphatic hydrocarbons, such as solvents of the Solvesso® series, for example Solvesso® 100, Solvesso® 150 or Solvesso® 200 (ExxonMobil Chemicals), of the Solvarex®/Solvaro® series (TotalFinaElf) or the Caromax® series, for example Caromax® 28 (Petrochem Carless), or
   (1d) halogenated hydrocarbons, such as halogenated aromatic and aliphatic hydrocarbons, such as chlorobenzene or methylene chloride;
(2) aprotic polar solvents, such as ethers, esters of C₁-C₉-alkanoic acids which may be mono-, di- or polyfunctional, such as their mono-, di- or triesters, for example with C₁-C₁₈-alkyl alcohols, ketones with a low tendency to tautomerize, phosphoric acid esters, amides, nitriles or sulfones, for example tris-2-ethylhexyl phosphate, diisobutyl adipate, Rhodiasolv® RPDE (Rhodia), cyclohexanone, Jeffsol® PC (Huntsman), γ-butyrolactone, N-methylpyrrolidone, N-butylpyrrolidone, dimethyl sulfoxide, acetonitrile, tributylphosphatam or the Hostarex® PO series (Clariant);
(3) fatty acid esters, for example of natural origin, for example natural oils, such as animal oils or vegetable oils, or of synthetic origin, for example the Edenor® series, for example Edenor® MEPa or Edenor® MESU, or the Agnique® ME series or Agnique® AE series (Cognis), the Salim® ME series (Salim), the Radia® series, for example Radia® 30167 (ICI), the Prilube® series, for example Prilube® 1530 (Petrofina), the Stepan® C series (Stepan) or the Witconol® 23 series (Witco). The fatty acid esters are preferably esters of C₁₀-C₂₂-, with preference C₁₂-C₂₀-fatty acids. The C₁₀-C₂₂-fatty acid esters are, for example, esters of unsaturated or saturated C₁₀-C₂₂-fatty acids, in particular those having an even number of carbon atoms, for example erucic acid, lauric acid, palmitic acid, and in particular C₁₈-fatty acids, such as stearic acid, oleic acid, linoleic acid or linolenic acid.

Examples of fatty acid esters such as C₁₀-C₂₂-fatty acid esters are glycerol and glycol esters of fatty acids such as C₁₀-C₂₂-fatty acids, or transesterification products thereof, for example fatty acid alkyl esters such as C₁₀-C₂₂-fatty acid C₁-C₂₀-alkyl esters, which can be obtained, for example, by transesterification of the abovementioned glycerol or glycol fatty acid esters such as C₁₀-C₂₂-fatty acid esters with C₁-C₂₀-alcohols (for example methanol, ethanol, propanol or butanol). Preferred fatty acid alkyl esters such as C₁₀-C₂₂-fatty acid C₁-C₂₀-alkyl esters are methyl esters, ethyl esters, propyl esters, butyl esters, 2-ethylhexyl esters and dodecyl esters. Preferred glycol and glycerol fatty acid esters such as C₁₀-C₂₂-fatty acid esters are the uniform or mixed glycol esters and glycerol esters of C₁₀-C₂₂-fatty acids, in particular of such fatty acids having an even number of carbon atoms, for example erucic acid, lauric acid, palmitic acid and in particular C₁₈-fatty acids such as stearic acid, oleic acid, linoleic acid or linolenic acid.

Animal oils and vegetable oils are generally known and commercially available. For the purpose of the present invention, the term "animal oils" is to be understood as meaning oils of animal origin such as whale oil, cod-liver oil, musk oil or mink oil, and the term "vegetable oils" is to be understood as meaning oils of oleaginous plant species, such as soybean oil, rapeseed oil, corn oil, sunflower oil, cottonseed oil, linseed oil, coconut oil, palm oil, thistle oil, walnut oil, arachis oil, olive oil or castor oil, in particular rapeseed oil, where the vegetable oils also include their transesterification products, for example alkyl esters, such as rapeseed oil methyl ester or rapeseed oil ethyl ester.

The vegetable oils are preferably esters of C₁₀-C₂₂-fatty acids, preferably C₁₂-C₂₀-fatty acids. The C₁₀-C₂₂-fatty acid esters are, for example, esters of unsaturated or saturated C₁₀-C₂₂-fatty acids having, in particular, an even number of carbon atoms, for example erucic acid, lauric acid, palmitic acid and in particular C₁₈-fatty acids such as stearic acid, oleic acid, linoleic acid or linolenic acid. Examples of vegetable oils are C₁₀-C₂₂-fatty acid esters of glycerol or glycol with C₁₀-C₂₂-fatty acids, or C₁₀-C₂₂-fatty acid C₁-C₂₀-alkyl esters which can be obtained, for example, by transesterification of the glycerol or glycol C₁₀-C₂₂-fatty acid esters mentioned above with C₁-C₂₀-alcohols (for example methanol, ethanol, propanol or butanol). The vegetable oils can be contained in the mixtures for example in the form of commercially available vegetable oils, in particular rapeseed oils, such as rapeseed oil methyl ester, for example Phytorob® B (Novance, France), Edenor® MESU and the Agnique® ME series (Cognis, Germany) the Radia® series (ICI), the Prilube® series (Petrofina), or biodiesel or in the form of commercially available plant-oil-containing formulation additives, in particular those based on rapeseed oils, such as rapeseed oil methyl esters, for example Hasten® (Victoria Chemical Company, Australia), Actirob® B (Novance, France), Rako-Binol® (Bayer AG, Germany), Renol® (Stefes, Germany) or Mero® (Stefes, Germany).

Examples of synthetic acid esters are, for example, those derived from fatty acids having an odd number of carbon atoms, such as C₁₁-C₂₁-fatty acid esters.

Preferred organic solvents are hydrocarbons, in particular aromatic hydrocarbons and/or aliphatic hydrocarbons and fatty acid esters, such as vegetable oils, such as triglycerides of fatty acids having 10 to 22 carbon atoms, which may be saturated or else unsaturated, straight-chain or branched and which may or may not carry further functional groups, such as corn oil, rapeseed oil, sunflower oil, cottonseed oil, linseed oil, soybean oil, coconut oil, palm oil, thistle oil or castor oil, and their trans-esterification products, such as fatty acid alkyl esters, and mixtures thereof.

Preferred solvents for use in the present invention include: linear or branched C6 to C30 paraffin oils, for example hexane, heptane, octane, nonane, decane, undecane, dodecane, tridecane, tetradecane, pentadecane, hexadecane, their mixtures, or mixtures thereof with higher boiling homologs, such as hepta-, octa-, nona-decane, eicosane, heneicosane, docosane, tricosane, tetracosane, pentacosane, and the branched chain isomers thereof; aromatic or cycloaliphatic solvents, which may be unsubstituted or substituted, C7- to C18-hydrocarbon compounds such as mono- or polyalkyl-substituted benzenes, or mono- or polyalkyl-substituted naphthalenes; vegetable oils such as liquid triglycerides, for example olive oil, kapok oil, castor oil, papaya oil, camellia oil, palm oil, sesame oil, corn oil, rice bran oil, peanut oil, walnut oil, coconut oil, cotton seed oil, soybean oil, rapeseed oil, linseed oil, tung oil, sunflower oil, safflower oil, or also transesterification products thereof, e.g. alkyl esters, such as rapeseed oil methyl ester or rapeseed oil ethyl ester; animal oil, such as whale oil, cod-liver oil, or mink oil; liquid esters of C1 to C12 monoalcohols or polyols, for example butanol, n-octanol, i-octanol, dodecanol, cyclopentanol, cyclohexanol, cyclooctanol, ethylene glycol, propylene glycol or benzyl alcohol, with C2 to C10 carboxylic or polycarboxylic acids, such as caproic acid, capric acid, caprylic acid, pelargonic acid, succinic acid and glutaric acid; or with aromatic carboxylic acids such as benzoic acid, toluic acid, salicylic acid and phthalic acid. Esters which can be used in the composition of the invention are thus, for example, benzyl acetate, caproic acid ethyl ester, isobornyl acetate, pelargonic acid ethyl ester, benzoic acid methyl or ethyl ester, salicylic acid methyl, propyl, or butyl ester, diesters of phthalic acid with saturated aliphatic or alicyclic C1 to C12 alcohols, such as phthalic acid dimethyl ester, dibutyl ester, diisooctyl ester; liquid amides of C1-C3 amines, alkylamines or alkanolamines with C6 to C18 carboxylic acids; or mixtures thereof.

It is preferable to use an organic solvent that has a boiling point above 100°C (at 100 KPa), more preferably above 150°C, even more preferably above 200°C, as the reduced volatility ensures that the fluroxypyr-meptyl, (which is dissolved in droplets of the oil on the surface of the weed) has sufficient time to penetrate the waxy coating on the leaf of the weed before the oil evaporates.

To further improve stability of the oil dispersion it is preferable to use an organic solvent (or mixture of organic solvents) in which water saturation at 20°C is 700 mg/kg or lower (coulometric Karl Fischer titration: ASTM E1064-12), more preferably 500 mg/kg or lower, even more preferably 300 mg/kg or lower and most preferably 200 mg/kg or lower. While the alkali metal salt or alkaline earth metal salt form of the SU reduces loss of the active agent due to hydrolysis, choosing an organic solvent that has a low water saturation ensures that trace amounts of water dissolved in the solvent can be kept to a minimum to further reduce loss of the active agent through hydrolysis during storage.

For the purposes of the present invention it is preferable that the organic solvent comprises isobornyl acetate. Preferably, isobornyl acetate makes up 80 wt.% or more, more preferably 90 wt.% or more and most preferably 95 wt.% or more of the total amount of organic solvent in the oil dispersion. Although isobornyl acetate has a melting point of 29°C, when used in the oil dispersions of the present invention the oil dispersion remains as a liquid at room temperature and lower. No crystallisation of the solvent is observed even after prolonged storage. Furthermore, isobornyl acetate facilitates suspension of the alkali metal salt of the SU and readily dissolves the fluroxypyr active ingredient. Moreover, although it is not an aromatic solvent, isobornyl acetate surprisingly imparts stability to the oil dispersion at low temperatures and successfully delivers fluroxypyr through the waxy coating on the leaf of a weed. Isobornyl acetate is also advantageous from a safety and environmental perspective for the end user as compared to the traditional aromatic solvents which require special equipment for their handling.

The non-aqueous solvent system is present in an amount such that it can act as a liquid carrier for the other components that are present in the composition. Preferably, the non-aqueous solvent system comprises an organic solvent in an amount of at least 5 wt.% based on the weight of the composition. A low amount of organic solvent is possible when other components in the composition are also liquids (e.g. liquid herbicide and/or liquid emulsifier). More preferably, the non-aqueous solvent system comprises an organic solvent in an amount of at least 10 wt.%, at least 15 wt.%, at least 20 wt%, at least 25 wt%, or at least 30 wt.% of the composition. Preferably the non-aqueous solvent system comprises an organic solvent in an amount of 95 wt.% or less of the composition. More preferably the non-aqueous solvent system comprises an organic solvent in an amount of 90 wt.% or less, 85 wt.% or less, 80 wt.% or less, 75 wt.% or less, or 60 wt.% or less of the composition. Any of the disclosed wt.% lower limits for the amount of the organic solvent in the non-aqueous solvent system can be combined with any of the disclosed wt.% upper limits to define further suitable wt.% ranges for the purpose of this invention. As an example, exemplary ranges for the amount of the organic solvent in the composition include 5 to 95 wt.%, 10 to 90 wt.%, 20 to 80 wt.%, 30 to 60 wt.%, 10 to 75 wt.% and 20 to 60 wt.%.

When more than one organic solvent is present in the composition then the amounts described herein refer to the sum amount of all the organic solvents present in the composition.

The total amount of protic organic solvent such as alcohols, amines and carboxylic acids is preferably kept to 20 wt.% or less based on the weight of the oil dispersion. More preferably, the total amount of protic organic solvent is 15 wt.% or less, 10 wt.% or less, 5 wt.% or less, 2 wt.% or less, or 1 wt.% or less of the composition. When more than one protic solvent is present in the composition then the amounts described herein refer to the sum amount of all the protic solvents present in the composition.

### 4.5 Fluroxypyr active ingredient

The oil dispersion of the invention comprises fluroxypyr-meptyl dissolved in the non-aqueous solvent system.

In terms of making the oil dispersion more manageable to handle in terms of total volume and dosage, the fluroxypyr active ingredient is preferably comprised in the oil dispersion of the invention in an amount of at least 5 wt.% based on the total weight of the oil dispersion. More preferably, the fluroxypyr active ingredient is comprised in an amount of at least 10 wt.%, at least 15 wt.%, at least 20 wt.%, at least 25 wt.%, at least 30 wt.%. The fluroxypyr active ingredient is preferably comprised in the oil dispersion in an amount of 70 wt.% or less. More preferably, the fluroxypyr active ingredient is comprised in an amount of 60 wt.% or less, 55 wt.% or less, 50 wt.% or less, 45 wt.% or less, 40 wt.% or less, or 35 wt.% or less. Any of the preferred lower wt.% limits for the amount of fluroxypyr active ingredient can be combined with any of the preferred upper wt.% limits to define further suitable wt.% ranges for the present invention. As an example, further exemplary ranges for the amount of fluroxypyr active ingredient in the oil dispersion include 5 to 70 wt.%, 10 to 60 wt.%, 15 to 55 wt.%, 20 to 50 wt.%, 25 to 45 wt.%, 30 to 40 wt.%, 15 to 25 wt.%, 25 to 35 wt.% and 30 to 35 wt.%. When more than one fluroxypyr active ingredient is present in the composition, then the amounts described herein refer to the sum amount of all the sulfonylureas present in the composition.

### 4.6 Additional active agents

### 4.6.1 Co-herbicides

The oil dispersion of the present invention may comprise one or more herbicides (co-herbicides) in addition to the sulfonylurea salt and fluroxypyr active ingredient. These co-herbicides may be liquids, waxy solids or powders and may be dissolved, dispersed, suspended or otherwise contained in the oil dispersion. The co-herbicide is not particularly limited and can be any herbicidal compound known in the art. For example, the compound may be selected from the herbicidal compounds listed in the 16th Edition of "The Pesticide Manual" (ISBN-10: 190139686X) and the literature cited therein. Exemplary additional herbicidal compounds include:
2,4-D (e.g. ester or amine), 2,4-DB, 2,3,6-TBA, acetochlor, acifluorfen, acifluorfen-sodium, aclonifen, alachlor, alloxydim, alloxydim-sodium, ametryn, amicarbazone, aminopyralid, amitrole, anilofos, asulam, atrazine, azafenidin, beflubutamid, benazolin,-benazolin-ethyl, benfuresate, bentazone, benzfendizone, benzobicyclon, benzofenap, bifenox, bilanafos, bispyribac-sodium, bromacil, bromobutide, bromofenoxim, bromoxynil, butachlor, butafenacil, butenachlor, butralin, butroxydim, butylate, cafenstrole, carbetamide, carfentrazone-ethyl, chlomethoxyfen, chloridazon, chlornitrofen, chlorotoluron, cinidon-ethyl, cinmethylin, clefoxydim, clethodim, clodinafop-propargyl, clomazone, clomeprop, clopyralid, cloransulam-ethyl, cumyluron, cyanazine, cycloxydim, cyhalofop-butyl, daimuron, dazomet, desmedipham, dicamba, dichlobenil, dichlorprop, dichlorprop-P, diclofop-methyl, diclosulam, difenzoquat, diflufenican, diflufenzopyr, dikegulac-sodium, dimefuron, dimepiperate, dimethachlor, dimethametryn, dimethenamid, diquat-dibromide, dithiopyr, diuron, dymron, EPTC, esprocarb, ethalfluralin, ethofumesate, ethoxyfen, etobenzanid, fenoxaprop-ethyl, fenoxaprop-P-ethyl, fentrazamide, flamprop-M-isopropyl, flamprop-M-methyl, florasulam, fluazifop, fluazifop-butyl, fluazolate, flucarbazone-sodium, fluchloralin, flufenacet, flufenpyr, flumetsulam, flumiclorac-pentyl, flumioxazin, fluometuron, fluorochloridone, fluoroglycofen-ethyl, flupoxam, fluridone, flurprimidol, flurtamone, fluthiacet-methyl, fomesafen, glufosinate, glufosinate-ammonium, glyphosate, haloxyfop, haloxyfop-ethoxyethyl, haloxyfop-methyl, haloxyfop-P-methyl, hexazinone, imazamethabenz-methyl, imazamox, imazapic, imazapyr, imazaquin, imazethapyr, indanofan, ioxynil, isoproturon, isouron, isoxaben, isoxachlortole, isoxaflutole, ketospiradox, lactofen, lenacil, linuron, MCPA, MCPB, mecoprop, mecoprop-P, mefenacet, mesotrione, metamifop, metamitron, metazachlor, methabenzthiazuron, methyldymron, metobromuron, metolachlor, metosulam, metoxuron, metribuzin, molinate, monolinuron, naproanilide, napropamide, neburon, norflurazon, orbencarb, oryzalin, oxadiargyl, oxadiazon, oxaziclomefone, oxyfluorfen, paraquat, pelargonic acid, pendimethalin, pendralin, penoxsulam, pentoxazone, pethoxamid, phenmedipham, picloram, picolinafen, pinoxaden, piperophos, pretilachlor, profluazol, profoxydim, prometryn, propachlor, propanil, propaquizafop, propisochlor, propoxycarbazone-sodium, propyzamide, prosulfocarb, pyraclonil, pyraflufen-ethyl, pyrazolate, pyrazoxyfen, pyribenzoxim, pyributicarb, pyridafol, pyridate, pyriftalid, pyriminobac-methyl, pyrithiobac-sodium, quinclorac, quinmerac, quinoclamine, quizalofop-ethyl, quizalofop-P-ethyl, quizalofop-P-tefuryl, sethoxydim, simazine, simetryn, S-metolachlor, sulcotrione, sulfentrazone, sulfosate, tebuthiuron, tepraloxydim, terbuthylazine, terbutryn, thenylchlor, thiazopyr, thiobencarb, tiocarbazil, tralkoxydim, triallate, triaziflam, triclopyr, tridiphane, and trifluralin.

The co-herbicide is preferably comprised in the oil dispersion of the invention in an amount of at least 0.1 wt.%. More preferably, the co-herbicide is comprised in an amount of at least 0.2 wt.%, at least 0.5 wt.%, at least 0.7 wt.%, at least 1 wt.%, at least 2 wt.%, at least 5 wt.% or at least 10 wt.%. The co-herbicide is preferably comprised in the composition an amount of 50 wt.% or less. A large amount of co-herbicide is possible when the co-herbicide is itself a liquid. More preferably, the co-herbicide is comprised in an amount of 40 wt.% or less, 30 wt.% or less, 20 wt.% or less or 15 wt.% or less. Any of the disclosed wt.% lower limits for the amount of co-herbicide can be combined with any of the disclosed wt.% upper limits to define further suitable wt.% ranges for the purposes of this invention. As an example, further exemplary ranges for the amount of co-herbicide in the oil dispersion include 0.1 to 50 wt.%, 1 to 40 wt.%, 2 to 30 wt.%, 5 to 20 wt.%, 10 to 15 wt.% and 1 to 15 wt.%.

When a salt or derivative (ester, etc.) of the co-herbicide is employed for the purposes of this invention then the wt.% amounts that are described herein refer to the weight of the salt or derivative. When more than one co-herbicide is present in the composition (as a salt, derivative or otherwise), then the amounts described herein refer to the sum amount of all of the co-herbicides present in the composition.

In the present invention one or more of the fluroxypyr active ingredients or co-herbicides may be partially or wholly encapsulated (e.g. microcapsules) such as is described in WO 2008/061721 A2 (GAT Microencapsulation AG). In such case the wt.% amounts that are described herein refer to the weight of the co-herbicides without the encapsulating material.

In addition to the one or more fluroxypyr active ingredients, the oil dispersion of the invention may comprise the alkali metal salt or alkaline earth metal salt of any of the sulfonylureas described herein with any of the co-herbicides described herein.

For example, in addition to the one or more fluroxypyr active ingredients, the oil dispersion may comprise the alkali metal salt or alkaline earth metal salt of tribenuron methyl and any of the other co-herbicides described herein. Exemplary combinations with the alkali metal salt or alkaline earth metal salt of tribenuron methyl include: tribenuron methyl and 2,4-D (e.g. as ester or amine or choline salt); tribenuron methyl and MCPA (e.g. as ester or amine); tribenuron methyl and bromoxynil; tribenuron methyl and glyphosphate; tribenuron methyl and dicamba (e.g. as the sodium salt or diglycolamine salt or ester); tribenuron methyl and mecoprop-P; tribenuron methyl and MCPB; tribenuron methyl, fluroxypyr and clopyralid; tribenuron methyl and carfentrazone ethyl; tribenuron methyl and clopyralid (e.g. as MEA salt); tribenuron-methyl and clodinafop; tribenuron-methyl and quinclorac; tribenuron-methyl and florasulam.

In addition to the one or more fluroxypyr active ingredients, the oil dispersion may comprise the alkali metal salt or alkaline earth metal salt of nicosulfuron and any of the other co-herbicides described herein. Exemplary combinations with the alkali metal salt or alkaline earth metal salt of nicosulfuron include: nicosulfuron and dicamba (optionally as the sodium salt or ester); nicosulfuron and atrazine; nicosulfuron and flumetsulam; nicosulfuron and clopyralid (optionally as the potassium salt or ester); nicosulfuron and diflupenzopyr (optionally as the sodium salt or ester); nicosulfuron and metolachlor; and nicosulfuron and terbuthylazine.

In addition to the one or more fluroxypyr active ingredients, the oil dispersion may comprise metsulfuron methyl and any of the other co-herbicides described herein. Exemplary combinations with the alkali metal salt or alkaline earth metal salt of metsulfuron methyl include: metsulfuron-methyl and acetochlor; metsulfuron methyl and carfentrazone ethyl; metsulfuron methyl and imazapyr; metsulfuron methyl and aminopyralid; metsulfuron methyl and sulfometuron methyl; metsulfuron methyl and mecoprop-p; metsulfuron-methyl and picloram; metsulfuron methyl and pyraflufen ethyl; metsulfuron methyl and propanil; metsulfuron methyl and glyphosate-ammonium; metsulfuron methyl and dicamba (optionally as the sodium, dimethylammonium or diglycolamine salt or as an ester); metsulfuron methyl and 2,4-D (optionally as the dimethylammonium salt, choline salt, or an ester); and metsulfuron-methyl, dicamba (optionally as the sodium, dimethylammonium or diglycolamine salt or as an ester) and 2,4-D (optionally as the dimethylammonium salt, choline salt, or an ester).

Further exemplary combinations of the alkali metal salt or alkaline earth metal salt of sulfonylureas and co-herbicides for use in the present invention include: bensulfuron-methyl and indanofan; bensulfuron-methyl and clomeprop; bensulfuron-methyl and pretilachlor; bensulfuron-methyl and fentrazamide; bensulfuron-methyl and thenylchlor; bensulfuron-methyl and pentoxazone; bensulfuron-methyl and pyriminobac-methyl; bensulfuron-methyl and bromobutide; bensulfuron-methyl, pentoxazone, pyriminobac-methyl, and bromobutide; bensulfuron-methyl and butachlor; bensulfuron-methyl and daimuron; bensulfuron-methyl and mefenacet; bensulfuron-methyl, daimuron and mefenacet; chlorimuron ethyl and sulfentrazone; iodosulfuron-methyl (optionally as the sodium salt) and isoxadifen-ethyl; iodosulfuron-methyl (optionally as the sodium salt) and propoxycarbazone (optionally as the sodium salt); iodosulfuron-methyl (optionally as the sodium salt) and diflufenican; iodosulfuron-methyl (optionally as the sodium salt) and fenoxaprop-P-ethyl; mesosulfuron (and/or as the methyl ester) and diflufenican; mesosulfuron (and/or as the methyl ester) and propoxycarbazone (e.g. sodium salt); pyrasulfuron-ethyl and pretilachlor; pyrasulfuron-ethyl and pyriftalid; pyrasulfuron-ethyl and mefenacet; pyrasulfuron-ethyl and esprocarb; pyrasulfuron-ethyl and dimethametryn; pyrasulfuron-ethyl and oxaziclomefone; pyrasulfuron-ethyl and benzobicyclon; pyrasulfuron-ethyl and cyhalofop-butyl; pyrasulfuron-ethyl and penoxsulam; pyrasulfuron-ethyl, cyhalofop-butyl, pretilachlor, and dimethametryn; pyrasulfuron-ethyl, benzobicyclon and penoxsulam; pyrasulfuron-ethyl, benzobicyclon, dimethametryn and oxaziclomefone; pyrasulfuron-ethyl, pretilachlor, dimethametryn, and esprocarb; pyrasulfuron-ethyl, benzobicyclon, butachlor and pyraclonil; pyrasulfuron-ethyl, benzobicyclon and fentrazamide; foramsulfuron and isoxadifen ethyl; foramsulfuron and cyprosulfamide; foramsulfuron and thiencarbazone-methyl; foramsulfuron, iodosulfuron-methyl, and isoxadifen ethyl; foramsulfuron, iodosulfuron-methyl, cyprosulfamide and thiencarbazone-methyl; iodosulfuron and thiencarbazone-methyl; metsulfuron methyl, bensulfuron-methyl and acetochlor; thifensulfuron-methyl, chlorimuron-ethyl and flumioxazin; rimsulfuron and mesotrione; rimsulfuron and metolachlor; rimsulfuron and dicamba; rimsulfuron, metolachlor and dicamba; thifensulfuron-methyl and one or more of dicamba, 2,4-D-ester, MCPA-ester, clodinafop, quinclorac, fluroxypyr, acetochlor, lenacil and prometryn; chlorimuron-ethyl and acetochlor; chlorimuron-ethyl and metribuzin; chlorimuron-ethyl and imazethapyr.

### 4.6.2 Safeners

The oil dispersion of the present invention may comprise one or more safeners that may be dissolved, dispersed, suspended or otherwise contained in the composition. Suitable safeners are those listed in the "The Pesticide Manual" (ISBN-10: 190139686X), as well as those listed in paragraphs [0113] to [0129] of US 2006/0276337 A1, which paragraphs are incorporated herein by reference.

Exemplary safeners include:
(1) compounds of the type of dichlorophenylpyrazoline-3-carboxylic acid such as ethyl 1-(2,4-dichlorophenyl)-5-(ethoxy-carbonyl)-5-methyl-2-pyrazoline-3-carboxylate and related compounds, as described in WO 91/07874;
(2) derivatives of dichlorophenylpyrazolecarboxylic acid, preferably compounds such as ethyl 1-(2,4-dichlorophenyl)-5-methylpyrazole-3-carboxylate, ethyl 1-(2,4-dichlorophenyl)-5-isopropylpyrazole-3-carboxylate, ethyl 1-(2,4-dichlorophenyl)-5-(1,1-dimethylethyl)pyrazole-3-carboxylate, ethyl 1-(2,4-dichlorophenyl)-5-phenylpyrazole-3-carboxylate and related compounds, as described in EP-A-333 131 and EP-A-269 806;
(3) compounds of the type of the triazolecarboxylic acids, preferably compounds such as fenchlorazole, i.e. ethyl 1-(2,4-dichlorophenyl)-5-trichloro-methyl-(1H)-1,2,4-triazole-3-carboxylate, and related compounds (see EP-A-174 562 and EP-A-346 620);
(4) compounds of the type of the 5-benzyl- or 5-phenyl-2-isoxazoline-3-carboxylic acid, or the 5,5-diphenyl-2-isoxazoline-3-carboxylic acid, preferably compounds such as ethyl 5-(2,4-dichlorobenzyl)-2-isoxazoline-3-carboxylate or ethyl 5-phenyl-2-isoxazoline-3-carboxylate and related compounds, as described in WO 91/08202, or ethyl 5,5-diphenyl-2-isoxazolinecarboxylate or n-propyl ester or ethyl 5-(4-fluorophenyl)-5-phenyl-2-isoxazoline-3-carboxylate, as described in the patent application (WO-A-95/07897);
(5) compounds of the type of the 8-quinolineoxyacetic acid, preferably 1-methylhex-1-yl (5-chloro-8-quinolineoxy)acetate, 1,3-dimethylbut-1-yl (5-chloro-8-quinolineoxy)acetate, 4-allyloxybutyl (5-chloro-8-quinolineoxy)acetate, 1-allyloxyprop-2-yl (5-chloro-8-quinolineoxy)acetate, ethyl (5-chloro-8-quinolineoxy)acetate, methyl (5-chloro-8-quinolineoxy)acetate, allyl (5-chloro-8-quinolineoxy)acetate, 2-(2-propylideneiminooxy)-1-ethyl (5-chloro-8-quinolineoxy)acetate, 2-oxoprbp-1-yl (5-chloro-8-quinolineoxy)acetate and related compounds, as described in EP-A-86 750, EP-A-94 349 and EP-A-191 736 or EP-A-0 492 366;
(6) compounds of the type of the (5-chloro-8-quinolineoxy)malonic acid, preferably compounds such as diethyl (5-chloro-8-quinolineoxy)malonate, diallyl (5-chloro-8-quinolineoxy)malonate, methyl ethyl (5-chloro-8-quinoline-oxy)malonate and related compounds, as described in EP-A-0 582 198;
(7) active compounds of the type of the phenoxyacetic or -propionic acid derivatives or the aromatic carboxylic acids, such as, for example, 2,4-dichlorophenoxyacetic acid (esters), 4-chloro-2-methylphenoxy-propionic esters, MCPA or 3,6-dichloro-2-methoxybenzoic acid (esters);
(8) active compounds of the type of the pyrimidines, such as "fenclorim";
(9) active compounds of the type of the dichloroacetamides, which are frequently used as pre-emergence safeners (soil-acting safeners), such as, for example, "dichlormid" (-N,N-diallyl-2,2-dichloroacetamide), "R-29148" (3-dichloroacetyl-2,2,5-trimethyl-1,3-oxazolidone from Stauffer), "benoxacor" (4-dichloroacetyl-3,4-dihydro-3-methyl-2H-1,4-benzoxazine), "PPG-1292" (-N-allyl-N-[(1,3-dioxolan-2-yl)methyl]dichloroacetamide from PPG Industries), "DK-24" (-N-allyl-N-[(allylaminocarbonyl)methyl]dichloroacetamide from Sagro-Chem), "AD-67" or "MON 4660" (3-dichloroacetyl-1-oxa-3-azaspiro[4,5]decane from Nitrokemia or Monsanto), "dicyclonon" or "BAS145138" or "LAB145138" ((3-dichloroacetyl-2,5,5-tri-methyl-1,3-diazabicyclo[4.3.0]nonane from BASF) and "furilazol" or "MON 13900" ((RS)-3-dichloroacetyl-5-(2-furyl)-2,2-dimethyloxazolidone);
(10) active compounds of the type of the dichloroacetone derivatives, such as, for example, "MG 191" (CAS-Reg. No. 96420-72-3) (2-dichloromethyl-2-methyl-1,3-dioxolane from Nitrokemia);
(11) active compounds of the type of the oxyimino compounds, such as, for example, "oxabetrinil" ((Z)-1,3-dioxolan-2-ylmethoxyimino-(phenyl)acetonitrile), "fluxofenim" (1-(4-chlorophenyl)-2,2,2-trifluoro-1-ethanone O-(1,3-dioxolan-2-ylmethyl) oxime, and "cyometrinil" or "CGA43089" ((Z)-cyanomethoxyimino-(phenyl)acetonitrile);
(12) active compounds of the type of the thiazolecarboxylic esters, which are known as seed dressings, such as, for example, "flurazole" (benzyl 2-chloro-4-trifluoromethyl-1,3-thiazole-5-carboxylate);
(13) active compounds of the type of the naphthalenedicarboxylic acid derivatives, such as, for example, "naphthalic anhydride" (1,8-naphthalenedicarboxylic anhydride);
(14) active compounds of the type of the chromanacetic acid derivatives, such as, for example, "CL 304415" (CAS-Reg. No. 31541-57-8) (2-(4-carboxychroman4-yl)acetic acid from American Cyanamid);
(15) active compounds which, in addition to a herbicidal action against harmful plants, also have safener action on crop plants such as, for example, "dimepiperate" or "MY-93" (-S-1-methyl-1-phenylethyl piperidine-1-thiocarboxylate), "daimuron" or "SK 23" (1-(1-methyl-1-phenylethyl)-3-p-tolyl-urea), "cumyluron" or "JC-940" (3-(2-chlorophenylmethyl)-1-(1-methyl-1-phenyl-ethyl)urea, see JP-A-60087254), "methoxyphenone" or "NK 049" (3,3'-dimethyl-4-methoxybenzophenone), "CSB" (1-bromo-4-(chloromethylsulfonyl)benzene) (CAS-Reg No. 54091-06-4 from Kumiai).

Preferred herbicide safeners for use in the present invention include benoxacor, BCS (1-bromo-4-[(chloromethyl)sulfonyl]benzene), cloquintocet-mexyl, cyometrinil, cyprosulfamide, dichlormid, dicyclonon, 2-(dichloromethyl)-2-methyl-1,3-dioxolane (MG 191), dietholate, fenchlorazole-ethyl, fenclorim, flurazole, fluxofenim, furilazole, isoxadifen-ethyl, jiecaowan, jiecaoxi, mefenpyr, mefenpyrethyl, methoxyphenone ((4-methoxy-3-methylphenyl)(3-methylphenyl)methanone), mephenate, naphthalic anhydride and oxabetrinil.

The oil dispersion of the invention may comprise the alkali metal salt or alkaline earth metal salt of any of the sulfonylureas described herein with any suitable safener described herein. Exemplary combinations of sulfonylurea and safener include: iodosulfuron-methyl and mefenpyr-diethyl; mesosulfuron (and/or as the methyl ester) and mefenpyr-di-ethyl; mesosulfuron (and/or as the methyl ester) and propoxycarbazone (e.g. sodium salt) and mefenpyr-di-ethyl.

### 4.7 Co-formulants

The oil dispersion of the invention may comprise one or more additional co-formulants such as surfactants (e.g. emulsifiers and/or dispersants), thickeners and thixotropic agents, wetting agents, anti-drift agents, adhesives, penetrants, preservatives, antifreeze agents, antioxidants, solubilizers, fillers, carriers, colorants, antifoams, fertilizers, evaporation inhibitors and agents which modify pH and viscosity. In one embodiment of the invention the oil dispersion comprises at least one co-formulant that is an adjuvant, such as one of those listed in the Compendium of Herbicide Adjuvants, 12th Edition, Southern Illinois University, 2014, or any earlier edition thereof. Examples of commonly used adjuvants include, but are not limited to, paraffin oil, horticultural spray oils (e.g., summer oil), methylated rape seed oil, methylated soybean oil, highly refined vegetable oil and the like, polyol fatty acid esters, polyethoxylated esters, ethoxylated alcohols, alkyl polysaccharides and blends, amine ethoxylates, sorbitan fatty acid ester ethoxylates, polyethylene glycol esters, alkylpolyglucosides and their derivatives (e.g. esters), organosilicone based surfactants, ethylene vinyl acetate terpolymers, ethoxylated alkyl aryl phosphate esters and the like.

Preferably, the oil dispersion of the invention includes one or more surfactants to enable the forming of an emulsion when the composition is diluted with water. These surfactants can be cationic, anionic or non-ionic, but are preferably anionic or non-ionic.

Preferred non-ionic surfactants for use in this invention include: polyalkoxylated, preferably polyethoxylated, saturated and unsaturated aliphatic alcohols having 8 to 24 carbon atoms in the alkyl radical, which is derived from the corresponding fatty acids or from petrochemical products, and having 1 to 100, preferably 2 to 50, ethylene oxide units (EO), it being possible for the free hydroxyl group to be alkoxylated, which are commercially available, for example, as Genapol® X and Genapol® O series (Clariant), Crovol® M series (Croda) or as Lutensol® series (BASF); polyalkoxylated, preferably polyethoxylated, arylalkylphenols, such as, for example, 2,4,6-tris(1-phenylethyl)phenol (tristyrylphenol) having an average degree of ethoxylation of between 10 and 80, preferably from 16 to 40, such as, for example, Soprophor® BSU (Rhodia) or HOE S 3474 (Clariant); polyalkoxylated, preferably polyethoxylated, alkylphenols having one or more alkyl radicals, such as, for example, nonylphenol or tri-sec-butylphenol, and a degree of ethoxylation of between 2 and 40, preferably from 4 to 15, such as, for example, Arkopal® N series or Sapogenat® T series (Clariant); polyalkoxylated, preferably polyethoxylated, hydroxyfatty acids or glycerides which contain hydroxyfatty acids, such as, for example, ricinine or castor oil, having a degree of ethoxylation of between 10 and 80, preferably from 25 to 40, such as, for example, the Emulsogen® EL series (Clariant) or the Agnique® CSO series (Cognis); polyalkoxylated, preferably polyethoxylated, sorbitan esters, such as, for example, Atplus® 309 F (Uniqema) or the Alkamuls® series (Rhodia); polyalkoxylated, preferably polyethoxylated, amines, such as, for example, Genamin® series (Clariant), Imbentin® CAM series (Kolb) or Lutensol® FA series (BASF); di- and tri-block copolymers, for example from alkylene oxides, for example from ethylene oxide and propylene oxide, having average molar masses between 200 and 10 000, preferably from 1000 to 4000 g/mol, the proportion by mass of the polyethoxylated block varying between 10 and 80%, such as, for example, the Genapol® PF series (Clariant), the Pluronic® series (BASF), or the Synperonic® PE series (Uniqema).

Preferred ionic surfactants for use in this invention include: polyalkoxylated, preferably polyethoxylated, surfactants which are ionically modified, for example by conversion of the terminal free hydroxyl function of the polyethylene oxide block into a sulfate or phosphate ester (for example as alkali metal and alkaline earth metal salts), such as, for example, Genapol® LRO or dispersant 3618 (Clariant), Emulphor® (BASF) or Crafol® AP (Cognis); alkali metal and alkaline earth metal salts of alkylarylsulfonic acids having a straight-chain or branched alkyl chain, such as phenylsulfonate CA or phenylsulfonate CAL (Clariant), Atlox® 3377BM (ICI), or the Empiphos® TM series (Huntsman); polyelectrolytes, such as lignosulfonates, condensates of naphthalenesulfonate and formaldehyde, polystyrenesulfonate or sulfonated unsaturated or aromatic polymers (polystyrenes, polybutadienes or polyterpenes), such as the Tamol® series (BASF), Morwet® D425 (Witco), the Kraftsperse® series (Westvaco) or the Borresperse® series (Borregard).

Surfactants that can also be used in the present invention include organo-modified siloxanes (OMS) such as those disclosed in the Compendium of Herbicide Adjuvants, 12th Edition, Southern Illinois University, 2014, or any earlier edition thereof, as well as those disclosed in WO 2008/155108 A2 (GAT Microencapsulation), as well as the polyether-polysiloxane copolymers described in GB 2496643 (Rotam Agrochem), including those available from Evonik Industries under the trade names Break-Thru 9902™, Break-Thru 9903™, Break-Thru 5503™, Break-Thru 9907™ and Break-Thru 9908™.

If the oil dispersion of the invention comprises one or more surfactants then the surfactant is preferably included in an amount of at least 1 wt.% with respect to the total weight of the composition. More preferably, the surfactant is comprised in an amount of at least 2 wt.%, at least 5 wt.%, at least 10 wt.%, at least 15 wt.%, or at least 20 wt.%. The surfactant is preferably comprised in the composition an amount of 60 wt.% or less. More preferably, the surfactant is comprised in an amount of 50 wt.% or less, 40 wt.% or less, or 30 wt.% or less. Any of the disclosed wt.% lower limits for the amount of surfactant can be combined with any of the disclosed wt.% upper limits to define further suitable wt.% ranges for the purposes of this invention. As an example, further exemplary ranges for the amount of surfactant in the oil dispersion include 1 to 60 wt.%, 2 to 50 wt.%, 5 to 40 wt.%, 10 to 30 wt.%, 5 to 50 wt.% and 2 to 40 wt.%. Where more than one surfactant is used the preferred ranges refer to the total amount of surfactant present in the oil dispersion.

The oil dispersion may also include one or more suspending agents or rheology modifiers to provide physical stability to the suspension by increasing the viscosity of the liquid phase in order to prevent insoluble active ingredients from forming a layer at the bottom of the storage container (sedimentation). The present invention provides the SU in the form of an alkali metal or alkaline earth metal salt which reduces the tendency of the SU to sediment and form a hard pack at the bottom of a storage container. To the extent that the SU does form a sediment, this can be easily re-suspended by agitation before use. The reduced tendency for sedimentation and ease of resuspension can be further improved by incorporating one or more suspending agents and/or rheology modifiers in the oil dispersion.

Exemplary suspending agents and rheology modifiers for use in the present invention include, but are not limited to, hydrophilic and hydrophobic silicas, colloidal silicon dioxides, clays, and organoclays. The oil dispersion may include one or more of a clay, an organoclay, a silica or a surface modified silica. The clay type rheology modifiers may require a chemical activator, such as propylene carbonate, to help fully disperse and activate the mineral particles so they may form an optimal rheological structure and provide suitable thickening to the oil dispersion during storage. Preferred rheology modifiers include the organoclays such as Bentone, Bentone SD and Benathix Plus (all from Elementis Specialties, Inc.) and the fumed silicas such as Aerosil R974, Aerosil 200 and Aerosil 972 (all from Evonik Industries), and equivalent products thereof. When used, the clay or silica type rheology modifier is preferably included in the oil dispersion in an amount of from 0.1 wt.% to 20 wt.%, preferably from 0.5 wt.% to 10 wt.%, and more preferably from 1 wt.% to 5 wt.% with respect to the total weight of the oil dispersion. In view of minimizing sedimentation and increasing ease at which the inorganic SU can be re-suspended, silica is a preferred rheology modifier, particularly when the sodium salt of a SU is used, and more particularly when the non-aqueous solvent system comprises isobornyl acetate.

### 4.8 Method of preparation

The oil suspension of the invention can be prepared by any manner known in the art. For example, the alkali metal or alkaline earth metal salt can be pre-ground to a determined particle size and then added to an organic solution of fluroxypyr-meptyl, optionally containing additional co-herbicides and/or coformulant ingredients. It is also possible to mix the organic solvent, the active ingredients and any additional coformulant ingredients and then subject the mixture to treatment with a wet-mill, such as a ball mill, a sand mill etc., to obtain a desired average particle size. In a further example the alkali metal or alkaline earth metal salt is suspended in the oil (and optionally ground) to prepare a mill base which is subsequently combined (optionally together with co-formulant ingredients) with an organic solution of fluroxypyr-meptyl, (optionally containing co-formulant ingredients).

### 4.9 Chemical stability

The invention is concerned with improving chemical stability of a sulfonylurea herbicide in an oil dispersion comprising a non-aqueous solvent system and fluroxypyr meptyl. Improved chemical stability is achieved by formulating metsulfuron methyl sodium salt and suspending it in the oil dispersion. The sulfonylurea, the alkali metal salt thereof, and the non-aqueous solvent system (as well as any other components in the composition) can be selected to meet desired needs such as to ensure that the oil dispersion conforms with one or more local regulatory requirements.

In one aspect of the invention, the sulfonylurea (metsulfuron methyl as sodium salt) and the non-aqueous solvent system are selected such that the sulfonyl urea salt exhibits at least 85% chemical stability. Preferably, the sulfonyl urea salt exhibits at least 90% chemical stability, more preferably at least 95% chemical stability, and still more preferably at least 98% chemical stability. Chemical stability can be determined as a percentage of the sulfonyl urea salt remaining (e.g. as determined by HPLC) when the oil dispersion (e.g. a 50 ml sample of the oil dispersion in a 60 ml hermetically sealed Winchester bottle) has been stored at 54°C for two weeks relative to a corresponding control sample that has been stored at -10°C for two weeks. In another aspect of the invention, the oil dispersion is one where chemical stability of the sulfonyl urea (metsulfuron methyl as sodium salt) is improved by at least 2% compared to a corresponding oil dispersion where the sulfonylurea is not in a salt form. Chemical stability of the sulfonylurea in salt form and in non-salt form can be determined as described immediately above. The difference in chemical stability can then be calculated to determine that an improvement of at least 2% is achieved. Preferably, the sulfonyl urea (as the alkali metal salt or alkaline earth metal salt thereof) exhibits at least a 5% improvement, more preferably at least a 10% improvement, and even more preferably at least a 50% improvement in chemical stability.

In each of the above aspects, where the oil dispersion comprises more than one sulfonyl urea, the chemical stability, or improvement thereon, is determined based on the total amount of sulfonylurea herbicide in the oil dispersion.

### 4.10 Application of the composition

The type of plant to be controlled, the dilution and rate of application will depend upon the types and amount of the herbicide compounds that are contained in the composition and are known to those skilled in the art (e.g. see "The Pesticide Manual" (ISBN-10: 190139686X) and all earlier editions thereof). Typically, the oil dispersion of the invention is diluted with water and then applied to plant foliage and/or soil by methods commonly employed in the art, such as conventional high-volume hydraulic sprays, low-volume sprays, air-blast, and aerial sprays. The diluted composition may be applied to the plant foliage or to the soil or area adjacent to the plant. The dilution and rate of application will depend upon the type of equipment employed, the method and frequency of application desired, the recommended herbicide application rate, as well as the weeds to be controlled. The oil dispersion can be mixed with fertilizers or fertilizing materials (e.g. at the dilution step) before its application to weeds/crop plants. The oil dispersion can be utilized as the sole pesticidal agent or it can be employed in conjunction with other pesticidal agents such as, for example, microbicides, fungicides, other herbicides, insecticides, and acaricides, particularly if these have not already been included in the oil dispersion of the invention.

The oil dispersion of the present invention can be used against various weeds including, but not limited to, the following genera and species: *Abutilon theophrasti, Abutilum theophasti, Adonis aestivalis, Adonis spp., Aethusa cynapium, Agrostemma githago, Alopecurus myosuroides, Amaranthus blitoides, Amaranthus retroflexus, Amaranthus spp., Ambrosia, Anagallis arvensis, Anthemis spp., Anthemis arvensis, Aphanes arvensis, Arenaria spp., Artemisia spp., Atriplex patula, Avena sterilis, Bilderdykia convolvulus, Boraginaceae spp., Brassica, Bromus, Bugloss, Buglossoides arvensi, Calystegia sepium, Capsella bursa-pastoris, Centaurea cyanus, Cerastium arvense, Chamomilla recutita, Chenopodium album, Chrysanthemum, Chrysanthemum segetum, Cirsium arvense, Convolvulus spp., Convulvulus arvensis, Coronopus spp., Cytisus scoparius, Datura stramonium, Descurainia, Digitaria sanguinalis, Diplotaxis erucoides, Diplotaxis spp., Echinochloa, Echinochloa crus-galli, Epilobium angustifolium, Eriogonum, Eruca vesicaria, Fagopyrum, Fallopia, Fallopia convolvulus, Fumaria officinalis, Galeopsis tetrahit, Gallium aparine, Gallium spp., Geranium molle, Helianthus annus, Hypecoum procumbens, Kochia spp., Lactuca, Lamium amplexicaule, Lamium purpurem, Linum, Lithospermum arvense, Lolium rigidum, Malva sylvestris, Matricaria,* Myosotis *palustris, Myosotis arventis, Panicum miliaceum, Papaver rhoeas, Parietaria spp., Persicaria lapathifolia, Persicaria maculosa, Polygonum spp., Polygonum aviculare, Portulaca oleracea, Portulaca olerace, Raphanus raphanistrum, Reseda spp., Ridolphia saegetum, Rumex spp., Rumex acetosa, Rumex crispus, Rumex obtusifolius, Salsola kali, Senecio spp., Senecio vulgaris, Setaria verticillata, Setaria viridis, Silene spp., Sinapsis arvensis, Sisymbrium orientalis, Solanum americanum, Solanum nigrum, Sonchus spp., Sonchus oleraceus, Sorghum halepense, Spergula arvensis, Stellaria media, Thlaspi arvense, Ulex spp., Urdica dioica, Urtica urens, Vaccaria segetum, Veronica spp., Veronica hederifolia, Veronica persica, Viola spp., Viola arvensis, Viola bicolor, Volunteer rape, Volunteer sugar beet, Xanthium spp., Xanthium strumarium,* and *Xantium spinosum.*

The oil dispersion is particularly effective at controlling growth of the following weeds when metsulfuron-methyl is chosen as the sulfonylurea: Aethusa cynapium, *Alopecurus myosuroides, Anagallis arvensis, Anthemis arvensis,* Aphanes arvensis, Atriplex patula, *Bromus, Bugloss, Capsella bursa-pastoris, Centaurea cyanus, Chenopodium album, Chrysanthemum segetum, Fallopia convolvulus, Fumaria officinalis, Galeopsis tetrahit, Gallium aparine, Geranium molle, Lamium amplexicaule, Lamium purpurem, Myosotis arventis, Papaver rhoeas, Persicaria lapathifolia, Persicaria maculosa, Polygonum spp., Raphanus raphanistrum, Rumex spp., Senecio vulgaris, Sinapsis arvensis, Solanum americanum, Solanum nigrum, Sonchus oleraceus, Spergula arvensis, Stellaria media, Thlaspi arvense, Urtica urens, Veronica spp., Viola arvensis, Veronica hederifolia, Viola bicolor, Volunteer rape,* and *Volunteer sugar beet.*

The oil dispersion of the present invention can be used to control weeds (such as any of those mentioned above) in crops plants such as cereals crops (e.g. corn, oats (winter and spring), wheat (winter wheat and summer wheat), triticale, durum wheat, rye, barley (winter barley and spring barley), rice, etc.), maize, soya, potatoes, cotton, rapeseed, linseed, beet, sugar cane and also fruit plants. The oil dispersion of the invention can also be used to control weeds in permanent grasslands and newly sown grass leys. When metsulfuron-methyl is chosen as the sulfonylurea then the formulation is preferably used to control weeds in winter wheat, summer wheat, winter barley, spring barley, winter oats, spring oats, rye, triticale, durum wheat, maize, grasslands, grass leys. Preferred crops are wheat (e.g. winter wheat, or spring wheat (also named summer wheat)), barley (e.g. winter barley, or spring barley (also named summer barley)), triticale, and/or rye.

The term "crops" is to be understood as also including crops that have been rendered tolerant to herbicides or classes of herbicides (for example ALS, GS, EPSPS, PPO and HPPD inhibitors) as a result of conventional methods of breeding or genetic engineering. An example of a crop that has been rendered tolerant by conventional methods of breeding is Clearfield® summer rape (Canola). Examples of crops that have been rendered tolerant to herbicides by genetic engineering methods include e.g. glyphosate- and glufosinate-resistant maize varieties commercially available under the trade names RoundupReady® and LibertyLink®. Crops are also to be understood as being those which have been rendered resistant to harmful insects by genetic engineering methods, for example Bt maize (resistant to European corn borer), Bt cotton (resistant to cotton boll weevil) and also Bt potatoes (resistant to Colorado beetle). Examples of Bt maize are the Bt-176 maize hybrids of NK® (Syngenta Seeds). Examples of transgenic plants that contain one or more genes which code for an insecticidal resistance and express one or more toxins are KnockOut® (maize), Yield Gard® (maize), NuCOTIN33BC (cotton), Bollgard® (cotton), NewLeaf® (potatoes), NatureGard® and Protexcta®.

### 4.11 Further exemplary oil dispersions of the invention

While not intending to be limiting in any way, some preferred embodiments of the oil dispersions are as follows:
In a preferred embodiment, the oil dispersion comprises a non-aqueous solvent system comprising 30 to 80 wt.% of isobornyl acetate with respect to the total amount of the oil dispersion; fluroxypyr-meptyl is dissolved in the non-aqueous solvent system; and the sodium salt of metsulfuron-methyl is suspended in the non-aqueous solvent system; wherein fluroxypyr-meptyl is present in an amount of 10 to 60 wt.% with respect to the total amount of the oil dispersion, and the sodium salt of metsulfuron-methyl is present in an amount of 0.1 to 10 wt.%, preferably 0.1 to 5 wt.%, more preferably 0.3 to 3 wt.%, and even more preferably 0.7 to 2 wt.% with respect to the total amount of the oil dispersion.

The oil dispersion comprises a non-aqueous solvent system comprising 30 to 80 wt.% of isobornyl acetate with respect to the total amount of the oil dispersion; fluroxypyr-meptyl is dissolved in the non-aqueous solvent system; and the sodium salt of metsulfuron-methyl is suspended in the non-aqueous solvent system; wherein fluroxypyr-meptyl is present in an amount of 10 to 60 wt.%, preferably 20 to 50 wt.%, more preferably 25 to 40 wt.% and even more preferably 30 to 35 wt.% with respect to the total amount of the oil dispersion, and the sodium salt of metsulfuron-methyl is present in an amount of 0.1 to 10 wt.% with respect to the total amount of the oil dispersion.

In a further preferred embodiment, the non-aqueous solvent system of the oil dispersion comprises 40 to 60 wt.% of isobornyl acetate with respect to the total amount of the oil dispersion, fluroxypyr-meptyl is dissolved in the oil and the sodium salt of metsulfuron-methyl is suspended in the oil, wherein the amount of fluroxypyr-meptyl dissolved in the oil is 30 to 35 wt.% and the amount of sodium salt of metsulfuron-methyl suspended in the oil is 0.7 to 2 wt.%, both with respect to the total amount of the oil dispersion.

In the preferred embodiments discussed above the oil dispersion optionally comprises additional coformulants selected from tristyrylphenol (16) ethoxylate (Soprophor BSU™), tristyrylphenol ethoxylate phosphate ester (Soprophor 3D33™), polyoxyethylene (10) oleyl ether (Genapol™ O-100), polyoxyethylene (15) oleyl ether (Genapol™ O-1 50), polyoxyethylene (20) oleyl ether (Genapol™ O-200), crop oil (Petroleum) concentrate (AGRI-DEX™), organo-silicone surfactant polyalkyleneoxide modified heptamethylsiloxane (SILWET L-77™), PEG(20) sorbitan monolaurate (Tween 20™), octyl/decyl alkylpolyglycoside (Agnique PG 8107™), and fumed silicas such as Aerosil™ R974, Aerosil™ 200 and Aerosil™ 972. Especially preferred are tristyrylphenol (16) ethoxylate (e.g. 15 to 25 wt.%) and fumed silica (e.g. 1 to 5 wt.%).

### 5. EXAMPLE

An oil dispersion according to the present invention was prepared as described below.

### (i) Preparation of metsulfuron methyl sodium salt 25 wt.% millbase

A mixture of metsulfuron methyl sodium salt (250 g) and isobornyl acetate (750 g) was placed in a mill (Eiger Torrance Mini Mill) containing glass beads (1.0-1.25 mm). The suspension was then blended with a small round hole Silverson for 10 minutes at 3000 rpm to provide a metsulfuron methyl sodium salt 25 wt.% millbase.

### (ii) Preparation of oil dispersion

Fluroxypyr meptyl (330.6 g) was dissolved in a mixture of isobornyl acetate (466.9 g) and Soprophor BSU (200 g: Rhodia) using a Silverson LST round hole head for one hour at a speed of 4,000 rpm. The metsulfuron methyl sodium salt millbase concentrate (38.88 g), previously prepared, was then added along with the Aerosil 200 (20 g: Evonik Industries). The suspension was then blended using the Silverson for 45 minutes at a speed of 5,000 rpm.

A comparative oil dispersion using metsulfuron methyl as the SU was prepared as described above.

### Stability experiments:

The oil dispersions were stored in tightly closed containers in thermostatically controlled incubators at 54°C for 2 weeks with control samples stored at -10°C. After storage, all formulations were analysed for metsulfuron methyl content by HPLC. Stability is reported with respect to the amount of active ingredient remaining relative to a corresponding sample stored at - 10°C for two weeks.

**Table 1**

| | Example | Comparative Example |
|---|---|---|
| | OD1 | OD2 |
| Components (wt.%) | | |
| Metsulfuron-methyl sodium salt | 0.8 | |
| Metsulfuron-methyl | | 0.8 |
| Fluroxypyr-meptyl technical | 29.6 | 29.6 |
| Soprophor BSU | 18.3 | 18.3 |
| Aerosil 200 | 1.8 | 1.8 |
| Isobornyl acetate | to 100 | to 100 |
| | | |
| SU stability (%) | 98.9 | 52.8 |

The data in Table 1 demonstrates that the alkali metal salt or alkaline earth metal salt of a sulfonylurea not only stabilizes the sulfonylurea against decomposition in an oil dispersion, but also stabilizes the sulfonylurea even in the presence of a fluroxypyr-type co-herbicide. The oil dispersion of the invention also exhibited no sediment formation and was easily re-homogenised after a few bottle inversions.

### Field trial experiments:

Field trials (on wheat) of the oil dispersion showed excellent results in the destruction of both cleavers and broad leaved weeds in cereals demonstrating the ability of isobornyl acetate to effectively deliver the fluroxypyr active ingredients through the waxy coating of the leaves.

## Claims

1. A herbicidal oil dispersion comprising:
(i) a non-aqueous solvent system;
(ii) metsulfuron methyl, as the sodium salt thereof, suspended in the non-aqueous solvent system; and
(iii) fluroxypyr-meptyl dissolved in the non-aqueous solvent system.

2. The oil dispersion according to claim 1, further comprising a suspending agent or rheology modifier.

3. The oil dispersion according to claim 2, wherein the suspending agent is selected from silica, fumed silica, clay, and organoclay.

4. The oil dispersion according to any one of claims 1 to 3, further comprising one or more surfactants.

5. The oil dispersion according to claim 4, wherein the surfactant is selected from alkyl sulfates, alkylarylsulfonate salts, alkylphenol-alkylene oxide addition products, alcohol-alkylene oxide addition products, soaps, alkylnaphthalene-sulfonate salts, dialkyl esters of sulfosuccinate salts, sorbitol esters, quaternary amines, polyethylene glycol esters of fatty acids, block copolymers of ethylene oxide and propylene oxide, salts of mono and dialkyl phosphate esters, tristyrylphenol ethoxylates, vegetable oils and esters thereof.

6. The oil dispersion according to any one of claims 1 to 5, wherein the non-aqueous solvent system comprises at least one component selected from linear or branched C6 to C30 paraffin oils; aromatic or cycloaliphatic solvents; C7- to C18-hydrocarbon compounds; vegetable oils; liquid esters of C1 to C12 monoalcohols or polyols with C2 to C10 carboxylic or polycarboxylic acids or aromatic carboxylic acids; liquid amides of C1-C3 amines, alkylamines or alkanolamines with C6 to C18 carboxylic acids; isobornyl acetate; or mixtures thereof.

7. The oil dispersion according to any one of claims 1 to 6, wherein the non-aqueous solvent system comprises isobornyl acetate.

8. The oil dispersion according to any one of claims 1 to 7, comprising:
30 to 80 wt.% of isobornyl acetate;
0.2 to 5 wt.% of the sodium salt of metsulfuron-methyl suspended in the isobornyl acetate;
10 to 60 wt.% of fluroxypyr-meptyl dissolved in the isobornyl acetate;

9. The oil dispersion according to any one of claims 1 to 8, comprising:
40 to 60 wt.% of isobornyl acetate;
0.7 to 2 wt.% of the sodium salt of metsulfuron-methyl suspended in the isobornyl acetate;
20 to 35 wt.% of fluroxypyr-meptyl dissolved in the isobornyl acetate; and optionally
10 to 25 wt.% of tristyrylphenol (16) ethoxylate;
1 to 5 wt.% of fumed silica.

## Patentansprüche

1. Herbizide Öldispersion, umfassend:
(i) ein nichtwässriges Lösungsmittelsystem;
(ii) Metsulfuronmethyl als Natriumsalz davon, welches in dem nichtwässrigen Lösungsmittelsystem suspendiert ist; und
(iii) Ffluroxypyr-meptyl, welches in dem nichtwässrigen Lösungsmittelsystem gelöst ist.

2. Die Öldispersion gemäß Anspruch 1, ferner umfassend ein Suspendiermittel oder ein Rheologiemodifizierungsmittel.

3. Die Öldispersion gemäß Anspruch 2, worin das Suspendiermittel ausgewählt ist aus Kieselsäure, pyrogener Kieselsäure, Ton und Organoton.

4. Die Öldispersion gemäß mindestens einem der Ansprüche 1 bis 3, ferner umfassend ein oder mehrere Tenside.

5. Die Öldispersion gemäß Anspruch 4, worin das Tensid ausgewählt ist aus Alkylsulfaten, Alkylarylsulfonatsalzen, Alkylphenol-Alkylenoxid-Additionsprodukten, Alkohol-Alkylenoxidadditionsprodukten, Seifen, Alkylnaphthalinsulfonatsalzen, Dialkylestern von Sulfosuccinatsalzen, Sorbitolestern, quartären Aminen, Polyethylenglykolestern von Fettsäuren, Block-Copolymeren aus Ethylenoxid und Propylenoxid, Salzen von Mono-und Dialkylphosphatestern, Tristyrylphenolethoxylaten, Pflanzenölen und deren Ester.

6. Die Öldispersion gemäß mindestens einem der Ansprüche 1 bis 5, worin das nichtwässrige Lösungsmittelsystem mindestens eine Komponente, ausgewählt aus linearen oder verzweigten C6 bis C30 Paraffinölen; aromatischen oder cycloaliphatischen Lösungsmitteln; C7- bis C18-Kohlenwasserstoffverbindungen; pflanzlichen Ölen; flüssigen Estern von C1 bis C12 Monoalkoholen oder Polyolen mit C2 bis C10 Carbonsäuren oder Polycarbonsäuren oder aromatischen Carbonsäuren; flüssigen Amiden von Cl-C3-Aminen, Alkylaminen oder Alkanolaminen mit C6 bis C18 Carbonsäuren; Isobornylacetat oder Mischungen davon, umfasst.

7. Die Öldispersion gemäß mindestens einem der Ansprüche 1 bis 6, worin das nichtwässrige Lösungsmittelsystem Isobornylacetat umfasst.

8. Die Öldispersion gemäß mindestens einem der Ansprüche 1 bis 7, umfassend:
30 bis 80 Gew.-% Isobornylacetat;
0,2 bis 5 Gew.-% des Natriumsalzes von Metsulfuronmethyl, welches in dem Isobornylacetat suspendiert ist; und
10 bis 60 Gew.-% Furoxypyr-meptyl, welches in dem Isobornylacetat gelöst ist.

9. Die Öldispersion gemäß mindestens einem der Ansprüche 1 bis 8, umfassend:
40 bis 60 Gew.-% Isobornylacetat;
0,7 bis 2 Gew.-% des Natriumsalzes von Metsulfuronmethyl, welches in dem Isobornylacetat suspendiert ist;
20 bis 35 Gew.-% Furoxypyr-meptyl, welches in dem Isobornylacetat gelöst ist; und
optional
10 bis 25 Gew.-% Tristyrylphenol(16)ethoxylat; und l bis 5 Gew.-% pyrogene Kieselsäure.

## Revendications

1. Dispersion huileuse herbicide comprenant :
(i) un système de solvant non aqueux;
(ii) du metsulfuron-méthyle, comme sel de sodium de celui-ci, en suspension dans le système de solvant non aqueux ; et
(iii) du fluroxypyr-meptyle dissous dans le système de solvant non aqueux.

2. Dispersion huileuse selon la revendication 1, comprenant en outre un agent de suspension ou un modificateur de la rhéologie.

3. Dispersion huileuse selon la revendication 2, dans lequel l'agent de suspension est sélectionné à partir de la silice, de la silice fumée, de l'argile, et de l'organo-argile.

4. Dispersion huileuse selon l'une quelconque des revendications 1 à 3, comprenant en outre un ou plusieurs tensioactifs.

5. Dispersion huileuse selon la revendication 4, dans laquelle le tensioactif est sélectionné à partir des alkylsulfates, des sels d'alkylarylsulfonate, des produits d'addition d'oxyde d'alphylphénol-alkylène, des produits d'additions d'oxyde d'alcool-alkylène, des savons, des sels d'alkylnaphtalène-sulfonate, des dialkyesters de sels sulfosuccinate, des esters de sorbitol, des amines quaternaires, des esters de polyéthylène glycol d'acides gras, des copolymères en bloc d'oxyde d'éthylène et d'oxyde de propylène, des sels d'esters de mono- et dialkyl-phosphate, des éthoxylates de tristyrylphénol, des huiles végétales et des esters de ceux-ci.

6. Dispersion huileuse selon l'une quelconque des revendications 1 à 5, dans laquelle le système de solvant non aqueux comprend au moins un composant sélectionné à partir des huiles de paraffine en C6 à C30 linéaires ou ramifiées ; des solvants aromatiques ou cycloaliphatiques ; des composés hydrocarbures en C7 à C18 ; des huiles végétales ; des esters liquides de mono-alcools ou polyalcools en C1 à C12 avec des acides carboxyliques ou polycarboxyliques ou des acides carboxyliques aromatiques en C2 à C10 ; des amines liquides d'amines en C1 à C3, des alkylamines ou alcanolamines avec des acides carboxyliques en C6 à C18 ; de l'acétate d'isobornyle ; ou des mélanges de ceux-ci.

7. Dispersion huileuse selon l'une quelconque des revendications 1 à 6, dans laquelle le système de solvant non aqueux comprend de l'acétate d'isobornyle.

8. Dispersion huileuse selon l'une quelconque des revendications 1 à 7, comprenant :
30 à 80 % en poids d'acétate d'isobornyle ;
0,2 à 5 % en poids de sel de sodium de metsulfuron-méthyle en suspension dans de l'acétate d'isobornyle ;
10 à 60 % en poids de fluroxypyr-meptyle dissous dans de l'acétate d'isobornyle.

9. Dispersion huileuse selon l'une quelconque des revendications 1 à 8, comprenant :
40 à 60 % en poids d'acétate d'isobornyle ;
0,7 à 2 % en poids de sel de sodium de metsulfuron-méthyle en suspension dans de l'acétate d'isobornyle ;
20 à 35 % en poids de fluroxypyr-meptyle dissous dans de l'acétate d'isobornyle ; et facultativement
10 à 25 % en poids d'éthoxylate de tristyrylphénol (16) ;
1 à 5 % en poids de silice fumée.
